Europäisches Patentamt

European Patent Office

Office européen des brevets

(19)

(11) Numéro de publication : **0 308 369 B1**

(12) **FASCICULE DE BREVET EUROPEEN**

(45) Date de publication du fascicule du brevet :
**15.01.92 Bulletin 92/03**

(51) Int. Cl.$^5$ : **H02K 1/27**

(21) Numéro de dépôt : **88810567.3**

(22) Date de dépôt : **18.08.88**

(54) **Rotor à aimants permanents.**

(30) Priorité : **16.09.87 CH 3565/87**

(43) Date de publication de la demande :
**22.03.89 Bulletin 89/12**

(45) Mention de la délivrance du brevet :
**15.01.92 Bulletin 92/03**

(84) Etats contractants désignés :
**DE ES FR GB IT**

(56) Documents cités :
**DE-A- 3 200 418**
**GB-A- 2 172 443**
**SU-A- 1 014 095**
**US-A- 4 591 749**

(73) Titulaire : **Mavilor Systèmes S.A.**
**Grenette 162, Place de Notre Dame**
**CH-1700 Fribourg (CH)**

(72) Inventeur : **Tassinario, Giampiero**
**Via A. Da Settimello, 29**
**I-50040 Settimello/Firenze (IT)**

(74) Mandataire : **Jörchel, Dietrich R.A. et al**
**c/o BUGNION S.A. 10, route de Florissant**
**Case postale 375**
**CH-1211 Genève 12 Champel (CH)**

EP 0 308 369 B1

## Description

La présente invention concerne un rotor à aimants permanent pour moteur électrique comprenant un cylindre formant le corps du rotor muni d'une pluralité d'aimants permanents arqués disposés sur la périphérie du cylindre.

Des rotors à aimants permanents pour moteurs électriques sont bien connus et il en existe de différents types sur le marché. Ces rotors comprennent un corps cylindrique sur la périphérie duquel sont disposés des aimants permanents, en principe arqués. Les aimants sont fixés par collage ou par tout autre moyen d'ancrage d'une construction relativement compliquée. Les aimants permanents ne peuvent pas être fixés uniquement par collage car en fonction de la vitesse de rotation du rotor les forces centrifuges auxquelles les aimants sont soumis sont importantes et peuvent les décoller. Un moyen simple, au point de vue construction, consiste à entourer la périphérie du rotor portant les aimants collés, avec un fil en fibres de carbone enroulé dans le sens périphérique et comprimant radialement les aimants sur le corps cylindrique afin de compenser les efforts centrifuges dus à la rotation du rotor. Cette construction simple présente le désavantage d'augmenter l'entrefer magnétique entre le rotor et le stator. Des rotors de ce type sont décrits dans les fascicules de brevets SU-A-1104095, DE-A-3200418 et US-A-4591749.

La présente invention a pour but de proposer un rotor à aimants permanents de construction simple et palliant le désavantage de l'augmentation de l'entrefer magnétique.

Le rotor selon l'invention est caractérisé par le fait que les aimants sont collés sur le rotor espacés dans le sens périphérique de sorte à former des interstices axiales, que ces interstices sont remplies partiellement par un fil tendu continu en matière non magnétique qui passe d'une interstice à l'autre en passant alternativement sur les faces planes du rotor, et que le reste de l'espace de chaque interstice est rempli par une résine.

Les avantages de ce rotor est la facilité de fabrication, les aimants étant tenus contre le corps du rotor par les forces de compression exercées par le fil tendu entre les interstices, et le fait que cette construction n'augmente pas l'entrefer magnétique, le fil maintenant les aimants permanents se trouvant à l'intérieur des interstices axiales et non sur la périphérie du rotor. Il est à remarquer également qu'en remplissant les interstices avec le fil et la résine on obtient un rotor ayant une surface cylindrique continue diminuant, également le risque d'un éventuel balourd.

Afin d'annuler les forces axiales appliquées par le fil tendu sur les aimants, lorsqu'il passe alternativement sur les faces planes du rotor, qui pourraient avoir pour conséquence le déplacement axial de chaque aimant sur le corps cylindrique, on fait passer le fil dans chaque interstice dans les deux sens, ainsi, la résultante de ces forces axiales opposées s'annule. Dans ce but, on passe par exemple, une première fois le fil dans toutes les intersices et après être revenu dans l'interstice de départ on continue mais en chageant le sens de déplacement sur la face plane du rotor, c'est-à-dire que si la première fois en quittant la première interstice on a passé à une autre interstice en se déplaçant dans le sens de rotation des aiguilles d'une montre, au deuxième passage on se déplace dans le sens contraire de rotation des aiguilles d'une montre.

Bien sûr on peut effectuer d'abord quelques passages dans un sens et ensuite effectuer le même nombre de passages dans le sens opposé et ainsi de suite.

Selon une variante d'exécution, la forme de l'interstice est en V, ayant pris le soin d'avoir des aimants dont les faces parallèles à l'axe du rotor sont inclinées de sorte que deux telles faces adjacentes de deux aimants consécutifs dans le sens périphérique du rotor divergent vers l'extérieur, de sorte à augmenter les composantes radiales des efforts appliqués sur les aimants par le fil se trouvant dans les interstices.

Selon une variante d'exécution préférée, avant de passer le fil on dispose au fond de chaque interstice une pièce en matière non magnétique, par exemple du laiton, ayant une forme conjuguée à celle du fond de l'interstice ce qui permet une meilleure répartition de l'effort de compression (effet de coin).

Afin que la composante de compression radiale exercée par le fil sur l'aimant soit la plus grande possible, il faudrait que le fil passe d'une interstice à l'interstice diamétralement opposée. Néanmoins, à cause de l'arbre qui s'étend de part et d'autre du rotor ceci n'est pas possible. Alors on fait passer le fil d'une interstice à une autre suivant une ligne au moins approximativement droite et la plus proche possible du dimètre de cette face plane compte tenu de l'arbre du rotor.

L'invention sera décrite plus en détail à l'aide du dessin annexé représentant une exécution préférée de l'invention.

La figure 1 est une vue parallèle à l'axe du rotor.

La figure 2 est un détail agrandi de la figure 1.

La figure 3 est une vue de face de la figure 1, sans les fils et la résine.

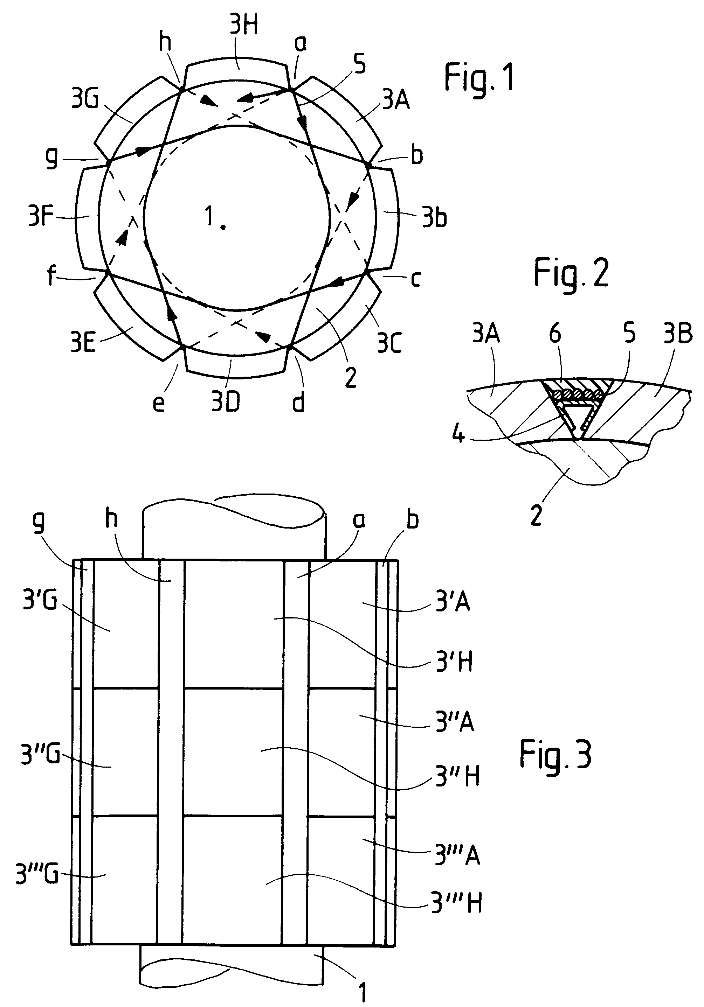

Le rotor est formé d'un corps cylindrique 2, monté sur un arbre 1, s'étendant de part et d'autre du corps 2. Le corps cylindrique 2 peut, par exemple, être formé d'une pile de tôles en matière magnétique montée sur l'arbre 1 ou être massif selon que la stator a ou n'a pas d'encoches. Sur la périphérie du corps 2, on a fixé par collage huit aimants permanents 3A, 3B, 3C, 3D, 3E, 3F, 3G, 3H, chaque aimant permanent ayant la forme d'un secteur annulaire. Les aimants 3A à 3H sont disposés sur la périphérie du rotor 2 de sorte à laisser des interstices axiales a, b ... h. Dans le cas représenté à la figure 1, les faces des aimants 3A à 3H parallèles à l'axe du rotor sont inclinées et divergent vers l'extérieur, ainsi les interstices a, b ... h ont la forme en V.

Au fond de chaque interstice a, b ... h est disposée une pièce 4 (figure 2) non magnétique et dans le cas présent il s'agit d'une plaquette pliée en laiton. Au-dessous de ces plaquettes on passe un fil en fibres de carbone ou de verre 5 appliquant une force de compression sur la pièce 4 et partant sur les deux faces inclinées des aimants adjacents.

Un exemple de la manière à passer le fil 5 dans les interstices a, b ... h est illustré à la figure 1. On commence par l'interstice a, on passe sur la face plane antérieure du rotor 2 (figure 1), on rentre dans l'interstice d, on revient par la face plane postérieure du rotor 2 dans l'interstice g, on passe par la face plane antérieure dans l'interstice b et ainsi de suite. On passe ainsi, dans l'ordre, dans les interstices e, h, c, f et on revient dans l'interstice a. A partir de ce moment, soit on refait le même chemin et dans le même ordre quelques fois et ensuite en sortant de l'interstice a on tourne en sens inverse c'est-à-dire a, f, c, h, e, b, g, d, a, le même nombre de fois, soit on effectue alternativement ces passages dans les deux sens.

La raison de ce changement de direction est pour obtenir l'annulation de la composante des forces axiales appliquées sur chaque aimant. En effet, le fil 5 tendu d'une interstice à l'autre applique sur la pièce 4 une compression ayant une composante radiale nécessaire pour maintenir les aimants plaqués contre le corps 1. Lorsque le fil 5 passe sur la face plane du rotor, en sortant par exemple de l'interstice a et entrant dans l'interstice d, applique sur les deux faces des aimants 3A et 3C, vues sur la figure 1, des forces axiales (dirigées perpendiculairement au plan de figure) qui peuvent avoir pour résultat le déplacement axial de ces aimants. Bien entendu, le même est vrai pour les autres aimants, par exemple, les aimants 3D et 3F sont poussés axialement dans le sens opposé à celui des aimants 3A et 3C et ainsi de suite. Afin d'annuler ces forces axiales il faut appliquer sur ces aimants des forces axiales opposées et pour cela il suffit de passer le fil dans le sens opposé comme expliqué précédemment. De cette manière, le fil passera, par exemple, de l'interstice a à l'interstice d en s'appuyant sur la face plane antérieure du rotor en appliquant sur les aimants 3H et 3F des forces axiales opposées à celles appliquées lors du passage de l'interstice a à l'interstice d en passant sur la face plane postérieure du rotor.

Il est à noter que la composante radiale de la compression appliquée sur la pièce 4 est plus importante lorsque le fil 5 passe d'une interstice à l'autre en suivant sur les faces planes du rotor de chemins aussi proches que possible du diamètre de ces faces planes, mais la présence de l'arbre 1 empêche de passer diamétralement d'une interstice à une autre et pour cela on essaie de passer le plus près possible et approximativement en ligne droite.

A la figure 1, les chemins choisis (a-d, d-g, ...) ne sont pas tout-à-fait des lignes droites, mais pour ce cas de figure, ils sont ceux qui assurent la plus grande composante radiale.

Le fil 5 est en principe mis en place par une machine connue en soi utilisée pour le bobinage d'un rotor à rainures axiales, donc la fabrication du rotor selon l'invention est faite sans avoir recours à des machines spéciales.

Après avoir tendu le fil 5 (comme expliqué précédemment) on remplit l'espace restant avec de la résine 6, de sorte à obtenir une surface cylindrique continue.

Comme on peut voir sur la figure 3, les aimants ne sont pas forcément en une seule pièce axialement et on peut avoir comme sur la figure 3 que chaque pôle magnétique est formé de trois aimants permanents juxtaposés, 3'A, 3"A, 3'''A ; 3'H, 3"H, 3'''H ; 3'G, 3"G, 3'''G, etc.

## Revendications

1. Rotor à aimants permanents pour moteur électrique comprenant un cylindre (2) formant le corps du rotor muni d'une pluralité d'aimants permanents (3A-3H) arqués disposés sur la périphérie du cylindre, caractérisé par le fait que les aimants sont collés sur le rotor espacés dans le sens périphérique de sorte à former des interstices axiales (a-h), que ces interstices sont remplies partiellement par un fil (5) tendu continu en matière non magnétique qui passe d'une interstice à l'autre en passant alternativement sur les faces planes du rotor, et que le reste de l'espace de chaque interstice est rempli par une résine (6).

2. Rotor selon la revendication 1, caractérisé par le fait que le fil (5) après avoir passé au moins une seule fois dans toutes les interstices (a-h), passe au moins une deuxième fois dans les interstices en sens inverse.

3. Rotor selon l'une des revendications 1 ou 2, caractérisé par le fait que les interstices (a-h) ont une forme en V, les faces planes et parallèles à l'axe du rotor de chaque aimant étant inclinées de sorte que les faces planes adjacentes de deux aimants (3A-3H) consécutifs dans le sens périphérique divergent vers l'extérieur.

4. Rotor selon l'une des revendications 1 à 3, caractérisé par le fait que le fil (5) s'appuie sur une pièce (4) en matière non magnétique disposée au fond de chaque interstice (a-h) et ayant une forme conjuguée à celle de l'interstice.

5. Rotor selon l'une des revendications 1 à 4, caractérisé par le fait que le fil (5) passe d'une interstice (a-h) à une autre en laissant au moins une interstice entre elles.

6. Rotor selon l'une des revendications 1 à 4, caractérisé par le fait que le fil (5) passe d'une interstice (a-h) à une autre de sorte que la partie du fil s'appuyant sur l'une des faces planes du rotor soit au moins approximativement droite et la plus proche possible du diamètre de cette face plane du rotor (2) compte tenu de la présence de l'arbre (1) du rotor (2).

7. Rotor selon l'une des revendications 1 à 6, caractérisé par le fait que le fil (5) est un fil en fibres de carbone.

8. Rotor selon l'une des revendications 1 à 6, caractérisé par le fait que le fil (5) est un fil en fibres de verre.

9. Rotor selon la revendication 4, caractérisé par le fait que ladite pièce (4) est une lame de laiton pliée.

10. Rotor selon l'une des revendications 1 à 9, caractérisé par le fait que chaque pôle magnétique est formé dans le sens axial, par plusieurs aimants (3A-3H) juxtaposés.

11. Rotor selon l'une des revendications 1 à 10, caractérisé par le fait que la surface cylindrique du rotor (2) est parfaitement continue après le remplissage des rainures avec la résine (6).


## Patentansprüche

1. Dauermagnetläufer für einen elektrischen Motor mit einem den Läuferkörper bildenden Zylinder (2), der mit einer Vielzahl von gebogenen, längs des Zylinderumfangs angeordneten Dauermagneten (3A-3H) versehen ist, dadurch gekennzeichnet, dass die Magnete auf dem Läufer in Umfängsrichtung im Abstand voneinander durch Kleben derart befestigt sind, dass axiale Lücken (a-h) gebildet werden, dass diese Lücken teilweise durch einen kontinuierlichen, gespannten Draht (5) aus nicht magnetischem Material gefüllt sind, welcher von einer Lücke zur anderen Lücke abwechselnd über die ebenen Flächen des Läufers verläuft, und dass der übrige Raum jeder Lücke mit einem Harz (6) gefüllt ist.

2. Läufer nach Anspruch 1, dadurch gekennzeichnet, dass der Draht (5), nachdem er wenigstens einmal in allen Lücken (a-h) verlaufen ist, wenigstens ein zweites Mal im umgekehrten Sinne in den Lücken verläuft.

3. Läufer nach einem der Ansprüche 1 oder 2, dadurch gekennzeichnet, dass die Lücken (a-h) V-förmig sind, wobei die ebenen und zur Läuferachse parallelen Flächen jedes Magneten derart geneigt sind, dass die benachbarten ebenen Flächen zweier im Umfangssinne aufeinanderfolgender Magnete (3A-3H) nach aussen divergieren.

4. Rotor nach einem der Ansprüche 1 bis 3, dadurch gekennzeichnet, dass sich der Draht (5) auf einem Teil (4) aus nicht magnetischem Material abstützt, welcher auf dem Boden jeder Lücke (a-h) angeordnet ist und eine der Gestalt der Lücke angepasste Form hat.

5. Läufer nach einem der Ansprüche 1 bis 4, dadurch gekennzeichnet, dass der Draht (5) von einer Lücke (a-h) zu einer anderen Lücke derart verläuft, dass dabei wenigstens eine dazwischenliegende Lücke ausgelassen wird.

6. Läufer nach einem der Ansprüche 1 bis 4, dadurch gekennzeichnet, dass der Draht (5) von einer Lücke (a-h) zu einer anderen Lücke derart verläuft, dass der sich auf einer der ebenen Flächen des Läufers abstützende Drahtabschnitt wenigstens näherungsweise geradlinig und, unter Berücksichtigung der Gegenwart der Läuferwelle (1), so nahe wie möglich längs des Durchmessers dieser ebenen Fläche des Läufers (2) verläuft.

7. Läufer nach einem der Ansprüche 1 bis 6, dadurch gekennzeichnet, dass der Draht (5) ein Draht aus Kohlenstoffasern ist.

8. Läufer nach einem der Ansprüche 1 bis 6, dadurch gekennzeichnet, dass der Draht (5) ein Draht aus Glasfasern ist.

9. Läufer nach Anspruch 4, dadurch gekennzeichnet, dass der erwähnte Teil (4) eine gebogene Lamelle aus Messing ist.

10. Läufer nach einem der Ansprüche 1 bis 9, dadurch gekennzeichnet, dass jeder magnetische Pol im axialen Sinne von mehreren nebeneinanderliegenden Magneten (3A-3H) gebildet wird.

11. Läufer nach einem der Ansprüche 1 bis 10, dadurch gekennzeichnet, dass die zylindrische Oberfläche des Läufers (2) nach dem Füllen der Lücken mit dem Harz (6) vollkommen kontinuierlich ist.


## Claims

1. A permanent magnet rotor for an electric motor, the rotor comprising a cylinder (2) forming its body and provided with a plurality of curved permanent magnets (3A-3H) disposed on the periphery of the cylinder, characterized in that the magnets are secured by adhesive bonding to the rotor and spaced apart in the peripheral direction so as to form axial interstices (a-h), in that said interstices are partly filled with a continuous tensioned thread (5) of nonmagnetic material which passes from one interstice to another, passing alternately over the plane faces of the rotor, and in that the remainder of the space in each interstice is filled with a resin (6).

2. A rotor as claimed in claim 1, characterized in that after having passed at least once in all the interstices the thread (5) passes at least a second time in the opposite direction in the interstices (a-h).

3. A rotor as claimed in either of claims 1 and 2, characterized in that the interstices (a-h) are V-shaped, the plane faces parallel to the axis of the rotor, of each magnet being inclined in such a manner that the adjacent plane faces of the two magnets (3A-3H) following one another in the peripheral direction diverge outwardly.

4. A rotor as claimed in one of claims 1 to 3, characterized in that the thread (5) bears against a member (4) of nonmagnetic material which is disposed at the bottom of each interstice (a-h) and has a shape matching that of the interstice.

5. A rotor as claimed in one of claims 1 to 4, characterized in that the thread (5) passes from one interstice (a-h) to another in such a manner as to leave at least one interstice between them.

6. A rotor as claimed in one of claims 1 to 4, characterized in that the thread (5) passes from one interstice (a-h) to another in such a manner that the portion of the thread which bears against one of the plane faces of the rotor is approximately straight and as close as possible to the diameter of the said plane face of the rotor (2), allowing for the presence of the motor shaft (1).

7. A rotor as claimed in one of claims 1 to 6, characterized in that the thread (5) is a carbon fiber thread.

8. A rotor as claimed in one of claims 1 to 6, characterized in that the thread (5) is a glass fiber thread.

9. A rotor as claimed in claim 4, characterized in that said member (4) is a folded brass plate.

10. A rotor as claimed in one of claims 1 to 9, characterized in that each magnetic pole is formed in the axial direction of a plurality of juxtaposed magnets (3A-3H).

11. A rotor as claimed in one of claims 1 to 10, characterized in that in the cylindrical surface of the rotor (2) is perfectly continuous after the interstices have been filled with resin (6).

Fig. 1

Fig. 2

Fig. 3